Europäisches Patentamt

European Patent Office

Office européen des brevets

(11) Numéro de publication: **0 502 571 A1**

# (12) DEMANDE DE BREVET EUROPEEN

(21) Numéro de dépôt: **92200546.7**

(22) Date de dépôt: **26.02.92**

(51) Int. Cl.5: **H04N 7/00**

(30) Priorité: **05.03.91 FR 9102598**

(43) Date de publication de la demande:
**09.09.92 Bulletin 92/37**

(84) Etats contractants désignés:
**DE FR GB**

(71) Demandeur: **PHILIPS ELECTRONIOUE GRAND PUBLIC**
**51, Rue Carnot**
**F-92150 Suresnes(FR)**
(84) **FR**

(71) Demandeur: **N.V. Philips' Gloeilampenfabrieken**
**Groenewoudseweg 1**
**NL-5621 BA Eindhoven(NL)**
(84) **DE GB**

(72) Inventeur: **Potier, Loic, Société Civile S.P.I.D.**
**156, Boulevard Haussmann**
**F-75008 Paris(FR)**
Inventeur: **Rakhodai, Issa, Société Civile S.P.I.D.**
**156, Boulevard Haussmann**
**F-75008 Paris(FR)**

(74) Mandataire: **Caron, Jean et al**
**Société Civile S.P.I.D. 156, Boulevard Haussmann**
**F-75008 Paris(FR)**

(54) **Dispositif de décodage pour la réception de signaux de télévision selon un standard HDMAC.**

(57) Dispositif de décodage pour la réception de signaux de télévision selon un standard HDMAC, comprenant une chaine de décodage video avec un convertisseur analogique-numérique (1) fournissant un signal à huit bits à l'entrée d'un filtre numérique (2) suivi d'un amplificateur (11) dont le gain est supérieur à un et qui est constitué par un multiplicateur numérique. Selon l'invention, le filtre numérique (2) délivre, à la disposition de l'amplificateur (11) un signal comportant au moins neuf bits, éventuellement dix ou douze.
Application: télévision haute définition.

FIG.1

La présente invention concerne un dispositif de décodage pour la réception de signaux de télévision selon un standard HDMAC, comprenant une chaine de décodage video avec un convertisseur analogique-numérique délivrant un signal avec un nombre de bits égal à N à l'entrée d'un filtre numérique, suivi d'éléments de traitement numérique du signal et d'un amplificateur dont le gain est supérieur à un et qui est constitué par un multiplicateur numérique, le filtre numérique pouvant en outre être éventuellement suivi d'un circuit d'égalisation travaillant sur N bits.

Le dispositif selon l'invention est utilisé notamment pour la réception de signaux dans un standard HDMAC, par exemple le standard D2-HDMAC/Packet.

Une architecture pour un tel dispositif, comprenant les éléments mentionnés dans l'introduction ci-dessus, est décrite par exemple dans la communication présentée par G. Duvic et J. Veillard au congrès dit IBC88, tenu à Brighton en 1988, et intitulée "DESCRIPTION OF A D2-HDMAC/PACKET CHAIN".

Un signal de télévision émis selon le standard D2-MAC est filtré de façon telle qu'il ne peut pas présenter de pointes de tension sortant du gabarit. Par contre, dans un signal selon un standard HDMAC, par exemple D2-HDMAC, de telles pointes peuvent apparaître, à cause de suroscillations dues à un filtre de Nyquist qui est utilisé dans l'émetteur, et elles risquent alors, bien qu'elles soient signifiantes, d'être écrêtées dans certains circuits de traitement du signal en réception. Pour pallier cet inconvénient, on est amené à réduire l'amplitude du signal à l'entrée de la chaîne de décodage, avant le convertisseur analogique-numérique, ce qui donne plus de poids aux bits du signal numérique issu de ce convertisseur, et le signal est à nouveau amplifié par la suite, pour retrouver le niveau normal, par un amplificateur dont le gain est supérieur à un et qui est constitué par un multiplicateur numérique. Cette multiplication produit une augmentation du bruit de quantification. C'est pourquoi on peut estimer qu'un convertisseur travaillant avec un nombre de bits plus grand, et donc plus coûteux, est sans doute nécessaire.

L'invention propose un dispositif dans lequel le trop grand poids des bits à la sortie du convertisseur analogique-numérique est compensé, sans pour autant faire usage d'un convertisseur avec un plus grand nombre de bits.

Le dispositif selon l'invention est particulièrement remarquable en ce que le filtre numérique délivre un signal comportant au moins N + 1 bits, et en ce que le multiplicateur travaille sur au moins N + 1 bits.

L'invention est basée sur la remarque que, dans un filtre numérique, où il y a en général une série d'éléments de retardement en cascade entre lesquels on prélève des signaux, chacun d'eux est multiplié par un coefficient de pondération, ce qui ajoute des bits à chacun des signaux : dès lors on peut produire, pratiquement sans dépense supplémentaire, un signal à plus de N bits. Bien entendu l'invention ne permet pas de recréer ex nihilo de l'information, mais elle permet de pallier le défaut de quantification en le rendant invisible.

Lorsque, dans une variante de réalisation, le filtre numérique est suivi d'un circuit d'égalisation travaillant sur N bits, selon l'invention un autre filtre numérique, à réponse plate dans la bande passante, est placé après le circuit d'égalisation, cet autre filtre numérique délivrant un signal comportant au moins N + 1 bits, et le multiplicateur travaille sur au moins N + 1 bits.

La description qui va suivre, en regard des dessins annexés décrivant des exemples non limitatifs fera bien comprendre comment l'invention peut être réalisée.

La figure 1 représente une première variante de la chaîne de décodage selon l'invention.

La figure 2 représente un filtre numérique connu, pour illustrer la manière de créer des bits supplémentaires.

La figure 3 représente une deuxième variante de la chaîne de décodage selon l'invention.

On pourra se reporter à la publication mentionnée en introduction, pour obtenir des précisions sur l'environnement dans lequel s'insère la chaîne de décodage décrite ci-après.

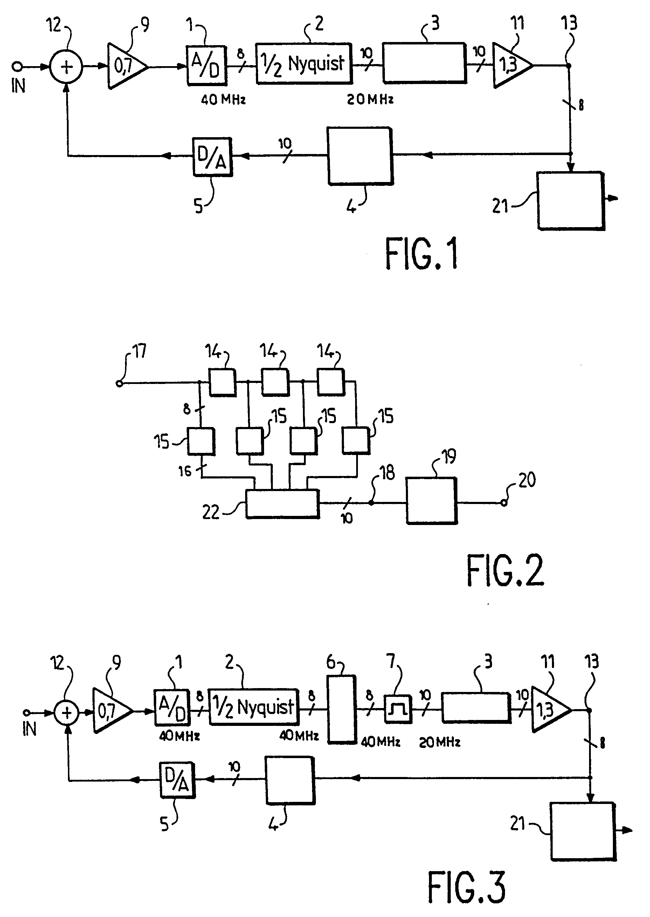

Sur la figure 1, un signal d'entrée analogique représentant un contenu d'image est amené à une entrée IN. A partir de cette entrée IN, il est appliqué à une des deux entrées d'un additionneur 12 dont le signal sortant est amené à l'entrée d'un atténuateur 9 servant à réduire l'amplitude du signal à l'entrée de la chaîne de décodage, afin d'éviter un écrêtage, comme cela a été expliqué en préambule. Après cette réduction d'amplitude, le signal est converti en valeurs numériques dans un convertisseur analogique-numérique 1. Si par exemple le signal pouvait évoluer normalement entre les valeurs -128 et + 127, après réduction d'amplitude, il évolue entre -100 et + 100. Alors que le bit de plus faible poids pouvait valoir 1/256$^e$ de l'excursion totale du signal, il en vaut maintenant 1/200$^e$, et il a donc un poids plus important dans la représentation du signal, ce qui veut dire que chaque accroissement d'une unité binaire correspond à une variation relative plus grande du signal : l'erreur de quantification est augmentée.

Le convertisseur analogique-numérique 1 fournit donc un signal fait de mots ou échantillons de huit bits à une fréquence d'horloge de 40,5 MHz, qui est filtré dans un filtre numérique 2. Le filtre 2 fournit un signal à plus de huit bits, par exemple à neuf, dix, ou douze bits, ceci étant obtenu d'une manière qui sera expliquée plus loin. Le signal sortant du filtre avec par exemple dix bits est appliqué à un circuit de désaccentuation 3 non linéaire dont la fonction est de réduire le bruit. Ce circuit travaille ici sur dix bits et sa sortie est reliée à l'entrée d'un étage d'amplification 11, qui est un multiplicateur puisqu'il s'agit d'un signal numérique, et qui est destiné à compenser l'atténuation apportée à l'entrée et à ramener le signal à son amplitude normale. Le signal à dix bits issu de cet étage est fourni sur une connexion 13. Il est repris par des éléments de décodage proprement dit 21 qui d'ailleurs travaillent sans inconvénient avec seulement huit bits.

La connexion 13 est aussi reliée à un ensemble d'alignement du niveau du signal à l'entrée du dispositif, qui comporte de façon connue un élément 4 pour calculer l'erreur sur le niveau numérique du signal de la connexion 13, et un convertisseur numérique-analogique 5 qui convertit cette erreur en un signal analogique de correction, lequel est appliqué à la deuxième entrée de l'additionneur 12 déjà mentionné. On pourrait penser à faire l'économie du convertisseur numérique/analogique 5 en appliquant la correction numériquement à un additionneur 12 numérique placé par exemple à la sortie du filtre 2 (de manière à faire l'addition sur dix bits) mais cela augmenterait la plage de fonctionnement nécessaire pour le convertisseur 1 puisqu'il devrait pouvoir faire face à un décalage de niveau du signal d'entrée, et cela augmenterait donc encore le poids des bits, ce qui va à l'encontre du but recherché.

Dans le système D2-HDMAC, un filtrage est opéré selon une courbe amplitude/fréquence obéissant aux "critères de Nyquist", aux abords de la fréquence 10,125 MHz. Le filtrage est partagé entre l'émetteur et le récepteur, dont le filtre 2 est donc un filtre "½ Nyquist". La fréquence d'horloge pour ce filtre est habituellement de 40,5 MHz, et des mots de huit bits sont requis à son entrée.

Un filtre numérique de ce genre est représenté sur la figure 2. Il comporte à partir d'une entrée 17 plusieurs éléments de retardement 14 en cascade, chacun d'eux étant en pratique un registre qui enregistre un nombre présenté à son entrée puis le restitue à l'instant d'horloge suivant. A l'entrée et après chacun des éléments de retardement 14, le signal est prélevé et chacun des signaux prélevés est amené à l'entrée d'un élément 15 multiplicateur, qui a pour fonction d'introduire une pondération, éventuellement différente pour chacun d'eux. Pour simplifier la figure, on a représenté seulement trois éléments de retardement, mais en pratique il y en a plus, par exemple quinze (avec seize prises). Les signaux en sortie de chacun des éléments multiplicateurs sont introduits dans un additionneur 22 pour être ajoutés les uns aux autres et délivrés sur la sortie 18 de l'additionneur. En outre la fréquence d'horloge utilisée par le filtre numérique est de 40,5 MHz, alors qu'une fréquence de seulement 20,25 MHz est requise par la suite. C'est pourquoi il est prévu un circuit 19 entre la sortie 18 de l'additionneur 22 et la sortie 20 du filtre, qui est un circuit dit "latch" servant à mémoriser la valeur de sortie entre un instant d'horloge et le suivant, ce qui entraîne qu'un échantillon sur deux est supprimé à la sortie 20.

Supposons que le coefficient fixe ou variable de multiplication soit défini dans chacun des éléments multiplicateurs 15 par huit bits, alors le produit de sa multiplication par le signal à huit bits comporte seize bits. Comme le contenu signifiant du signal correspond seulement à huit bits, il est d'usage de tronquer le produit en ne conservant que les huit bits les plus significatifs (la somme des différents coefficients de multiplication est égale à un et par conséquent le signal en sortie de l'additionneur 22 évolue entre les mêmes valeurs limites que le signal à l'entrée). L'additionneur 22 comporte donc des entrées à plus de huit bits, par exemple des entrées à 9 ou 10 ou 12 bits chacune, et bien entendu une sortie avec le même nombre de bits. En quelque sorte cela représente l'introduction d'une virgule et de valeurs après la virgule, qui n'ont pas de contenu informatif, mais qui ont le mérite d'évoluer progressivement entre les instants d'horloge successifs, en introduisant un lissage des marches d'escalier que provoquerait sans cet artifice l'insuffisance du nombre de bits.

Le circuit illustré à la figure 3 correspond à une variante de réalisation de celui illustré à la figure 1. Il comporte les mêmes éléments avec les mêmes références qui ne seront pas décrits à nouveau, et il en diffère seulement en ce que le filtre numérique "½ Nyquist" est suivi d'un circuit d'égalisation 6 connu, dont la fonction est habituellement de corriger des échos dans le signal, mais qui ici sert à corriger la phase du signal par rapport à celle de l'horloge. De tels circuits d'égalisation existent aujourd'hui dans le commerce, ils travaillent à 40,5 MHz et requièrent huit bits à leur entrée. Il n'est donc pas possible que le filtre numérique 2 leur délivre un signal comportant plus de huit bits. Dans ce cas, après le circuit d'égalisation 6, est ajouté un filtre numérique 7 à réponse plate dans la bande passante, ce filtre numérique délivrant, à la disposition des éléments situés dans la suite de la chaine, un signal comportant par exemple dix bits. Ces dix bits sont bien entendu obtenus da la manière expliquée plus haut à propos du filtre numérique "½ Nyquist".

Il est évident que si dans l'avenir il existait dans le commerce un circuit d'égalisation 6 travaillant sur plus de huit bits, il pourrait être inséré après le filtre "½ Nyquist" du circuit de la figure 1, le deuxième filtre 7 du circuit de la figure 3 devenant inutile.

## Revendications

1. Dispositif de décodage pour la réception de signaux de télévision selon un standard HDMAC, comprenant une chaine de décodage video avec un convertisseur analogique-numérique délivrant un signal avec un nombre de bits égal à N à l'entrée d'un filtre numérique, suivi d'éléments de traitement numérique du signal et d'un amplificateur dont le gain est supérieur à un et qui est constitué par un multiplicateur numérique, caractérisé en ce que le filtre numérique délivre un signal comportant au moins N + 1 bits, et en ce que le multiplicateur travaille sur au moins N + 1 bits.

2. Dispositif de décodage pour la réception de signaux de télévision selon un standard HDMAC, comprenant une chaine de décodage video avec un convertisseur analogique-numérique délivrant un signal avec un nombre de bits égal à N à l'entrée d'un filtre numérique, qui est suivi d'un circuit d'égalisation travaillant sur N bits, d'éléments de traitement numérique du signal et d'un amplificateur dont le gain est supérieur à un et qui est constitué par un multiplicateur numérique, caractérisé en ce qu'après le circuit d'égalisation est placé un autre filtre numérique, à réponse plate dans la bande passante, ce filtre numérique délivrant un signal comportant au moins N + 1 bits, et en ce que le multiplicateur travaille sur au moins N + 1 bits.

FIG.1

FIG.2

FIG.3

Office européen
des brevets

**RAPPORT DE RECHERCHE EUROPEENNE**

Numero de la demande

EP  92 20 0546

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | L'ONDE ELECTRIQUE, vol. 69, no. 4, juillet/août 1989, pages 20-25; J. VEILLARD: "Le système HDMAC: aspects radioélectriques" * Page 22, colonne de droite, ligne 13 - page 25, colonne de gauche, ligne 11 * --- | 1,2 | H 04 N   7/00 |
| A | GRUNDIG TECHNISCHE INFORMATIONEN, vol. 31, no. 1/2, 1984, pages 3-7; Dr. GLAAB: "Welche Vorteile bietet das Oversampling-Verfahren der Grundig Compact-Disc-Spieler?" * Document en entier * --- | 1,2 | |
| D,A | CONGRES IBC '88, Brighton, pages 12-16; G. DUVIC et al.: "Description of a D2-HD-MAC/PACKET chain" * Figure 2; page 14, colonne de droite, ligne 31 - page 15, ligne 10 * --- | 1,2 | |
| A | PROCEEDINGS OF THE IEEE 1990, CUSTOM INTEGRATED CIRCUITS CONFERENCE, Boston, Massachutetts, 13-16 mai 1990, pages 2531-2534, IEEE, New York, US; C. JOANBLANQ et al.: "A 54 MHz set for HDTV filtering" * Document en entier * --- | 1,2 | |
| A | SIGNAL PROCESSING OF HDTV, II, PROCEEDINGS OF THE THIRD INTERNATIONAL WORKSHOP ON HDTV, Turin, 30 août - 1 septembre 1989, pages 503-509; K. NAKAMURA et al.: "An adaptive equalizer for HDTV receiver" * Figures 1-6; paragraphe 4, pages 506-507 * ----- | 1,2 | |

DOMAINES TECHNIQUES RECHERCHES (Int. Cl.5)

H 04 N
H 03 H

Le présent rapport a été établi pour toutes les revendications

| Lieu de la recherche | Date d'achèvement de la recherche | Examinateur |
|---|---|---|
| LA HAYE | 04-05-1992 | BOSCH F.M.D. |

EPO FORM 1503 03.82 (P0402)